**Europäisches Patentamt**

**European Patent Office**

**Office européen des brevets**

(11) Veröffentlichungsnummer: **0 127 742**
**A1**

(12) # EUROPÄISCHE PATENTANMELDUNG

(21) Anmeldenummer: **84103374.9**

(22) Anmeldetag: **27.03.84**

(51) Int. Cl.³: **H 02 J 9/08**
**H 02 M 5/44**

(30) Priorität **11.05.83 DE 3317293**

(43) Veröffentlichungstag der Anmeldung:
**12.12.84 Patentblatt 84/50**

(84) Benannte Vertragsstaaten:
**AT CH FR GB LI SE**

(71) Anmelder: **HILTI Aktiengesellschaft**

**FL-9494 Schaan(LI)**

(72) Erfinder: **Gloor, Peter, Dipl.-Ing.**
**Malarsch 71**
**FL-9494 Schaan(LI)**

(72) Erfinder: **Goepfert, Peter, Dipl.-Ing.**
**Chrüzacherweg 33**
**CH-8906 Bonstetten(CH)**

(72) Erfinder: **Blaas, Karl**
**Werdenberg 36**
**CH-9470 Buchs(CH)**

(74) Vertreter: **Schwabe, Hans-Georg, Dipl.-Ing. et al,**
**Patentanwälte Dr. Berg Dipl.-Ing. Stapf Dipl.-Ing.**
**Schwabe Dr. Dr. Sandmair Postfach 86 02 45**
**Stuntzstrasse 16**
**D-8000 München 86(DE)**

(54) **Stromversorgungsvorrichtung.**

(57) Herkömmliche mobile Stromversorgungsvorrichtungen für zum Netzanschluß bestimmte Geräte, z.B. Bohrhämmer auf Baustellen, haben ein schlechtes Leistungsgewicht. Die Erfindung schafft daher einen solche Stromversorgungsvorrichtung, bei der die Energie einer Energiequelle, z.B. eines Motors (1), durch einen Generator (6), der einen Strom höherer Frequenz als für Netzgeräte geeignet erzeugt, umgewandelt wird, und die für Netzgeräte geeignete frequenz dann durch einen Umrichter (8, 20, 26) hergestellt wird.

EP 0 127 742 A1

./...

**Fig.1**

0127742

HILTI AG

FL 9494 Schaan

Fürstentum Liechtenstein

---

Stromversorgungsvorrichtung

---

## Beschreibung

Die Erfindung betrifft eine Stromversorgungsvorrichtung für einen mit Wechselstrom mit Netzfrequenz und -Spannung betreibbaren Verbraucher, mit einer Energiequelle und mit einer Einrichtung zum Erzeugen eines Wechselstromes mit einer der Netzspannung im wesentlichen entsprechenden Spannung aus der Energiequelle.

Derartige Stromversorgungsvorrichtungen, die häufig auch als Notstromaggregate bezeichnet werden bzw. als solche verwendet werden, werden dann benötigt, wenn kein Netzanschluß für zu betreibende Geräte vorhanden ist. Dies ist insbesondere z.B. auf Baustellen der Fall, wo noch kein Netzanschluß mit der landesüblichen Spannung (z.B. 100/110/118//125/220 V; 50/60 Hz, ggfs. 400 Hz) vorhanden ist. Die auf Baustellen verwendeten Geräte hingegen, z.B. Bohrhämmer, Niethämmer, Schleifmaschinen, Handsägen oder dergl., sind üblicherweise und auch zweckmäßig in Spannung und Frequenz auf die jeweilige Netz-Stromversorgung eingestellt, damit sie beim weiteren Baufortschritt und bei der Verwendung im Ausbau am Netz angeschlossen werden können.

Eine herkömmliche gattungsgemäße Vorrichtung besteht z.B. aus einem (Verbrennungs-)Motor und bspw. einem Asynchrongenerator mit einer oder drei Phasen. Die Motoren und die Generatoren dieser allgemein bekannten herkömmlichen Stromversorgungsaggregate für den oben genannten Zweck werden dann wegen der benötigten Ausgangsfrequenz von 50 Hz (oder 60 Hz, z.B. für die USA) mit ca. 3000 U/min betrieben. Sie erzeugen im wesentlichen die Spannung, die für die an sich zum Netzanschluß bestimmten Geräte bestimmt ist. Solche bekannten Aggregate haben ein schlechtes Leistungsgewicht, das in der Größenordnung von 15 bis 35 kg/kVA liegt, so daß ein 2 kVA-Aggregat üblicherweise ca. 40 kg, und ein 0,7 kVA-Aggregat ca. 25 kg und ein 6 kVA-Aggregat ca. 90 kg wiegt. Es ist ersichtlich, daß derartige Gewichte die Aggregate für einen einzelnen Mann kaum beweglich machen und ihren Vorteil der Ortsveränderlichkeit damit belasten, daß eine Ortsveränderung nur unter großem Aufwand möglich ist. Jedoch ist eine Gewichtsverringerung auch für Fahrzeuge aus vielen Gründen anzustreben und vorteilhaft.

Die Erfindung schafft daher eine Stromversorgungsvorrichtung der angegebenen Gattung, die bei insgesamt erheblich günstigerem Gewicht und insbesondere bei günstigerem Leistungsgewicht dennoch den Anschluß netzgeeigneter Geräte ermöglicht.

Dies wird erfindungsgemäß dadurch erreicht, daß die Einrichtung einen Wechselstrom mit einer höheren Frequenz als die Netzfrequenz erzeugt, und daß der Einrichtung ein Umrichter, der einen Strom mit Netzfrequenz erzeugt, nachgeschaltet ist.

Es ist an sich, z.B. aus der DE-OS 28 52 927, bekannt, daß bei
Drehstrommotoren das Leistungsgewicht durch Verwendung eines
(Netz-)stromes mit höherer Frequenz (z.B. 200, 300 oder 400
Hz) verbessert werden kann. In der DE-OS 28 52 927 sollen aber
gerade nicht herkömmliche Geräte verwendet werden, sondern besonders an eine erhöhte Frequenz angepaßte.

Die Erfindung hat insbesondere den Vorteil, daß die
erfindungsgemäßen Stromversorgungsvorrichtungen zur Umwandlung
der Energie einer Energiequelle in Netzstrom ein wesentlich
günstigeres Leistungsgewicht aufweisen als herkömmliche Geräte
zu diesem Zweck. Die Erfindung macht sich nämlich zunutze, daß
das Leistungsgewicht bei einer Stromerzeugung oder Umwandlung
unter hoher Frequenz wesentlich günstiger ist als bei den
niedrigen Frequenzen, die für Netzspannungen üblich sind.
Unter hoher Frequenz sollen hier in einem weiteren Bereich 1
bis 20 kHz und in einem besonders bevorzugten Bereich 2 bis 5
kHz verstanden werden. Der zusätzliche Umrichter, der keine
Spannungen mehr transformieren muß und, jedenfalls in seiner
Hauptfunktion, zur Herstellung der Netzfrequenz (d.h.
derjenigen Frequenz, die die Geräte üblicherweise benötigen,
und die für ein vorgegebenes Gebiet, z.B. Deutschland oder die
USA konstant zu sein pflegt (50 bzw. 60 Hz)) dient, kann so
leicht gestaltet werden, daß der durch die Umwandlung bei
hoher Frequenz entstehende Vorteil nicht wesentlich gemindert
wird. Ein derartiger Umrichter erlaubt es auch, die Frequenz,
z.B. für die Verwendung eines ausländischen Gerätes, auf
einfachere Weise umzustellen, als das sonst in der Regel
möglich ist.

Besonders bevorzugt ist der Umrichter als Gleichrichter mit
nachfolgendem Wechselrichter, der einen Strom mit Netzfrequenz
erzeugt, ausgebildet. Dabei ist bevorzugt der Wechselrichter
als Sinus-Wechselrichter ausgebildet. Diese Bauelemente sind
besonders bevorzugt elektronisch (und nicht elektromechanisch), wodurch ein geringes Gewicht eingehalten werden
kann.

Besonders bevorzugt ist die Vorrichtung als mobile Einheit
ausgebildet. Dabei wirkt sich der Vorteil des höheren
Leistungsgewichtes besonders deutlich aus, weil häufig
kritische Grenzwerte unterschreitbar sind. Solche mobilen
Einheiten können dann auf Baustellen oder dgl. bspw. zum
Betreiben von Bohrhämmern und ähnlichen, üblicherweise
netzabhängigen Geräten eingesetzt werden.

Besonders bevorzugt ist die Energiequelle als Antriebsmotor
und die Einrichtung zum Erzeugen eines Wechselstromes als
Wechselstrom-Generator ausgebildet. Die Frequenz des vom
Generator erzeugten Stromes liegt dabei bevorzugt zwischen 2
und 5 kHz.

Die Erzeugung eines Stromes mit einer hohen Frequenz kann
beispielsweise durch eine Erhöhung der Polzahl des Generators
erreicht werden. Der Generator erzeugt wiederum eine Spannung,
die so beschaffen ist, daß nachfolgend keine Transformatoren
benötigt werden, und die durch bloße Gleichrichtung und
Wechselrichtung (zur Netzfrequenz) in die gewünschte Netzspannung umgeformt werden kann.

Gerade hier läßt sich durch die höhere Frequenz des Generators
ein deutlich besseres Leistungsgewicht des Gesamtaggregates
(inklusive Motor und Umrichter) in der Größenordnung von
9kg/kVA erzielen. Die erfindungsgemäße Stromversorgungsvorrichtung läßt sich also im besonders wichtigen Bereich
zwischen 1 und 3 kVA Gerätenennleistung von einer Person
transportieren. Der zusätzliche Umrichter, der nur die Aufgabe
der Gleich- und der anschließenden Wechselrichtung zu erfüllen
hat, fällt dabei, wie gesagt, nicht ins Gewicht und erlaubt
vielmehr, die Frequenz auf einfache Weise der jeweiligen
Netzfrequenz, d.h. den vorliegenden netzgeeigneten Geräten,
anzupassen. Der Umrichter erlaubt auch die freiere Wahl des
Generators, der daher optimal ausgewählt werden kann. Ferner läßt sich im Teillast-Bereich die Motordrehzahl entsprechend zurückregeln, was bei den herkömmlichen Stromversorgungsvorrichtungen dieser Untergattung der Erfindung wegen der direkten Abhängigkeit der Ausgangsfrequenz von der Drehzahl nicht möglich ist.

Besonders bevorzugt ist der Antriebsmotor ein Motor mit hoher Drehzahl, vorzugsweise zwischen 5000 und 10.000 U/min. Dadurch läßt sich die erzielbare Generatorfrequenz weiter erhöhen und somit das Leistungsgewicht verbessern.

Bevorzugt ist eine Drehzahlregelung für den Motor vorgesehen. Dadurch ist es möglich, die Leistungsabgabe zu regeln, ohne daß dabei, wie bei herkömmlichen Stromversorgungsvorrichtungen, sich die Ausgangsfrequenz des Aggregates ändert.

In einer alternativ bevorzugten Ausführungsform ist die Energiequelle als Gleichstromquelle, und besonders bevorzugt als Akkumulator, und die Einrichtung zum Erzeugen eines Wechselstromes als Wechselrichter mit anschließendem Transformator ausgebildet. Häufig liegt die Energiequelle nur in Form eines Akkumulators (z.B. einer Autobatterie) vor, der Gleichstrom, und zudem mit einer Spannung, liefert, die erst in die Netzspannung transformiert werden muß. Die Energiequelle kann aber auch eine andere Gleichspannungsquelle sein, deren Spannung erst noch in die jeweilige Netzspannung transformiert werden muß. Liegt der Strom für den benötigten Transformator mit hoher Frequenz vor, so kann der Transformator ein erheblich günstigeres Leistungsgewicht haben und die Gesamt-Umformvorrichtung trotz des Hinzutretens eines nachgeschalteten Umrichters für die Frequenz ein günstigeres Leistungsgewicht erhalten.

Gemäß einem besonders bevorzugten und eigenständigen Merkmal der Erfindung ist eine Ausgangsstrombegrenzung für die Stromversorgungsvorrichtung vorgesehen. Diese erlaubt eine Dimensionierung, die sich an der maximal geforderten Nennleistung ausrichten kann. Herkömmliche gattungsgemäße Stromversorgungsvorrichtungen mit Generatoren neigen nämlich dazu,
sich bei erhöhter Belastung (Anlaufstrom der Geräte) und bei
Belastungsstößen selbst abzuschalten, da die meist verwendeten
Asynchrongeneratoren dabei ihre Selbsterregung über die
Hilfsphase verlieren. Daher müssen solche herkömmlichen
Vorrichtungen für den Antrieb motorisch betriebener Geräte und
Werkzeuge, die hohe Anlaufströme in der Größenordnung des 3
bis 8fachen Nennstroms aufweisen, stark überdimensioniert
werden. Für ein Werkzeug mit 1,5 kW-Universalmotor muß eine
herkömmliche Stromversorgungsvorrichtung von 3 bis 4 kVA, die
dann ein Gewicht von mehr als 50 kg hat, verwendet werden.
Durch diese Maßnahme kann also eine Gewichtsreduktion um 50%
erzielt werden. Durch die Strombegrenzung wird die
Stromversorgungsvorrichtung auch dauerkurzschlußfest.

Die Drehzahlregelung für den Motor wirkt besonders mit der
Ausgangsstrombegrenzung zusammen. Bei herkömmlichen
Anordnungen kann nämlich beim Zuschalten einer Last mit hohem
Anlaufstrom der Motor nicht mehr auf Nenndrehzahl
beschleunigen, außer wenn er entsprechend kräftig überdimensioniert ist. Diese Überdimensionierung kann hier also
vermieden werden.

Insgesamt wird also auch ein Aggregat mit einem erheblich
verbesserten Wirkungsgrad und dadurch geringerem Benzinverbrauch geschaffen.

Nachfolgend wird die Erfindung anhand von Blockschaltbildern, auf die wegen ihrer großen Klarheit und Übersichtlichkeit auch bezüglich der Offenbarung ausdrücklich verwiesen wird, noch näher erläutert.

Es zeigen:

Fig. 1: Ein Schaltbild einer Stromversorgungsvorrichtung nach der Erfindung in einer ersten Ausführungsform, bei der die Energiequelle ein Motor ist; und

Fig. 2: Eine weitere Ausführungsform der Erfindung, bei der die Energiequelle eine Batterie ist.

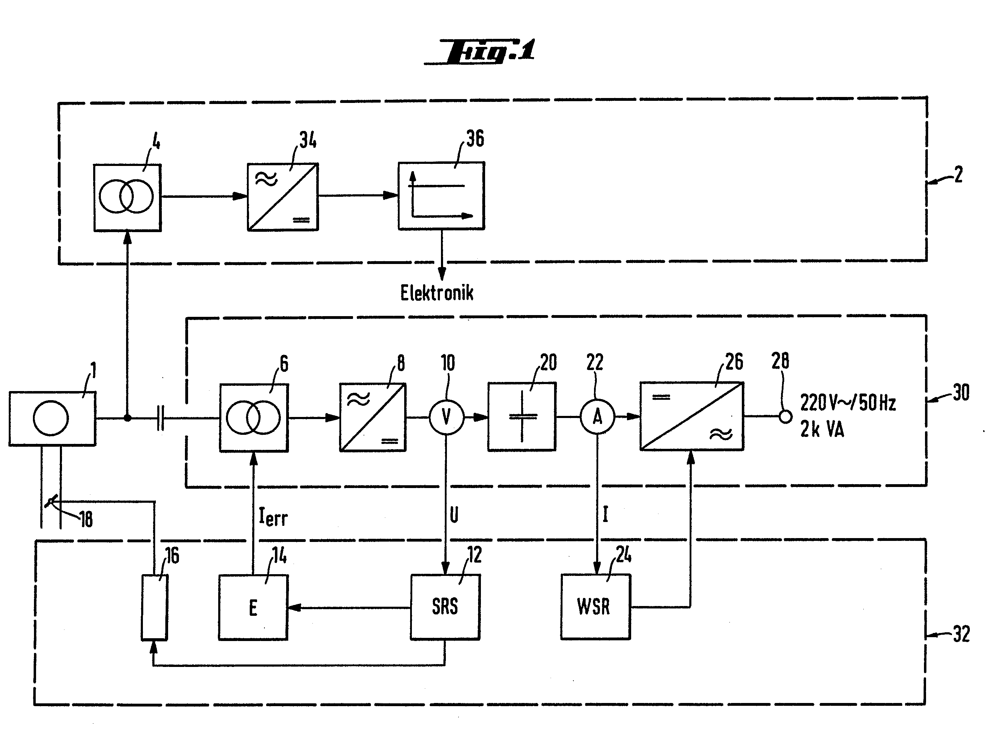

In Fig. 1 ist ein auf höhere Drehzahl (ca. 6000 U/min) ausgelegter Zweitaktmotor 1 gezeigt, der einerseits einen in einer insgesamt mit 2 bezeichneten Stromversorgungschaltung enthaltenen Hilfsgenerator 4, vorzugsweise einen kleinen, permanent-erregten Wechselstromgenerator, und andererseits den eigentlichen Generator 6 der Stromversorgungsvorrichtung antreibt. Dieser Generator ist bevorzugt ein Reluktanz-Generator, kann aber alternativ bevorzugt ein Klauenpol-Generator sein.

Der Strom des Generators 6 wird durch den Gleichrichter 8 eines Umrichters gleichgerichtet. Die Spannung U am Ausgang des Gleichrichters 8 wird durch einen Spannungsmesser 10 gemessen. Aufgrund des gemessenen Wertes regelt eine Spannungsregelschaltung 12 über eine den Erregungsstrom $I_{err}$ liefernde Einrichtung 14 den Erregerstrom für den Generator 6 und regelt ferner durch Ansteuerung eines Stellmotors 16, der auf die Drosselklappe 18 des Motors 1 einwirkt, diesen Motor 1, d.h. seine Drehzahl. Die Hauptfunktion der Spannungsregelschaltung 12 ist also das Regeln der Zwischenkreisspannung auf einen konstanten Wert, bevorzugt ca. 330 V Gleichspannung für 220 V Wechselspannung am Ausgang, von Leerlauf- bis Nennleistung.

Es kann ferner eine Überspannungschutzschaltung (nicht im einzelnen gezeigt) vorhanden sein, die bei Störfällen, zum Schutz der Bauteile und ggfs. auch zum Schutz von Personen angebracht ist. Diese kann ggfs. in 12 integriert sein.

Die Ausgangsspannung des Gleichrichters 8 wird über ein Siebteil 20 geglättet. Der Ausgangsstrom des Siebteils wird durch einen Strommesser 22 gemessen. Aufgrund des gemessenen Wertes steuert eine Wechselrichter-Stromregelungsschaltung 24, die eine Strombegrenzung bewirkt, den Wechselrichter 26 an, der an eine Ausgangklemme 28 der insgesamt mit 30 bezeichneten Stromaufbereitungsschaltung eine Spannung von 220 V bei 50 Hz und einer möglichen Leistungsentnahme von 2kVA anlegt. In einer ebenfalls bevorzugten Alternativlösung wird der Ausgangsstrom des Wechselrichters 26 durch den Strommesser 22 gemessen.

Die Elemente 12, 14, 16 und 24 sind in einer insgesamt mit 32 bezeichneten Steuerungs- und Regelungsschaltung zusammengefaßt. Die Stromversorgung 2 für die Elektronik weist noch einen an den Hilfs-Generator 4 angeschlossenen Gleichrichter 34 und eine an den Gleichrichter 34 angeschlossene Stabilisierungsschaltung 36 auf.

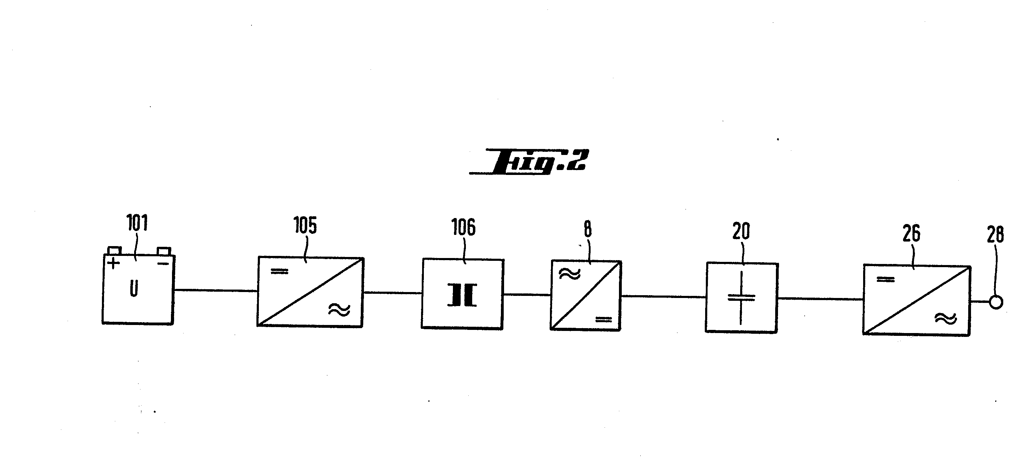

In Fig 2 ist eine Ausführungsform der Erfindung gezeigt, die es erlaubt, die Energie einer Gleichstromquelle, die nicht die erforderliche Netzspannung aufweist, bzw. deren Spannung so ist, daß sie zum Erhalt einer Netzspannung transformiert werden müßte, besonders günstig und gewichtssparend in Wechselstrom mit Netzspannung und Netzfrequenz umzuformen.

Eine Batterie 101 mit niedriger Spannung, z.B. 12 V, ist an einen Wechselrichter 105 angeschlossen, der einen Wechselstrom hoher Frequenz, hier 2 kHz, erzeugt. Dieser Wechselstrom mit hoher Frequenz wird nun auf eine Spannung transformiert, die auf einfache Weise durch den nachgeschalteten Gleichrichter 8 mit Glättungseinrichtung 20 und den diesem wiederum nachgeschalteten Wechselrichter 26 in die Netzspannung, hier 220 V, umgewandelt wird. Der Wechselrichter erzeugt gleichzeitig die Netzfrequenz. Ein Strom mit Netzspannung und Netzfrequenz, der mit einer Anlage 105 bis 26 aus der Energie der Gleichstromquelle 101 mit geringerem Gewicht gewonnen wurde, steht dann an der Ausgangsklemme 28 für zum Netzanschluß bestimmte Geräte bereit.

HILTI AG
FL 9494 Schaan
Fürstentum Liechtenstein

---

Stromversorgungsvorrichtung

---

Patentansprüche

1. Stromversorgungsvorrichtung für einen mit Wechselstrom mit Netzfrequenz und -Spannung betreibbaren Verbraucher, mit einer Energiequelle (1; 101) und mit einer Einrichtung (6; 105, 106) zum Erzeugen eines Wechselstromes mit einer der Netzspannung im wesentlichen entsprechenden Spannung aus der Energiequelle, d a d u r c h   g e k e n n z e i c h n e t, daß die Einrichtung (6; 105, 106) einen Wechselstrom mit einer höheren Frequenz als die Netzfrequenz erzeugt, und daß der Einrichtung ein Umrichter (8, 20; 26), der einen Strom mit Netzfrequenz erzeugt, nachgeschaltet ist.

2. Stromversorgungsvorrichtung nach Anspruch 1, dadurch gekennzeichnet, daß der Umrichter als Gleichrichter (8, 20) mit nachfolgendem Wechselrichter (26), der einen Strom mit Netzfrequenz erzeugt, ausgebildet ist.

3. Stromversorgungsvorrichtung nach Anspruch 1 oder 2, dadurch gekennzeichnet, daß die Vorrichtung als mobile Einheit ausgebildet ist.

4. Stromversorgungsvorrichtung nach einem der Ansprüche 1 bis 3, dadurch gekennzeichnet, daß die Energiequelle als Antriebsmotor (1) und die Einrichtung zum Erzeugen eines Wechselstromes als Wechselstrom-Generator (6) ausgebildet ist.

5. Stromversorgungsvorrichtung nach Anspruch 4, dadurch gekennzeichnet, daß der Antriebsmotor (1) ein Motor mit hoher Drehzahl, vorzugsweise zwischen 5000 und 10.000 U/min, ist.

6. Stromversorgungsvorrichtung nach einem der Ansprüche 4 oder 5, gekennzeichnet durch eine Drehzahlregelung (10, 12, 16, 18) für den Motor (1).

7. Stromversorgungsvorrichtung nach einem der Ansprüche 1 bis 3, dadurch gekennzeichnet, daß die Energiequelle als Gleichstromquelle, vorzugsweise als Akkumulator (101), und die Einrichtung zum Erzeugen eines Wechselstromes als Wechselrichter (105) mit anschließendem Transformator (106) ausgebildet ist.

8. Stromversorgungsvorrichtung nach einem der vorhergehenden Ansprüche, gekennzeichnet durch eine Ausgangsstrombegrenzung (22, 24).

Fig.1

Elektronik

220 V~/50 Hz
2 k VA

$I_{err}$   U   I

E   SRS   WSR

Fig.2

| Europäisches Patentamt | **EUROPÄISCHER RECHERCHENBERICHT** | | |

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| X | Patent Abstracts of Japan Band 3, Nr. 41, 10. April 1979 Seite 149E103 & JP-A-54-21545 | 1,2,4, 5 | H 02 J    9/08<br>H 02 M    5/44 |
| A | GB-A-1 381 260   (F.L.F. STEGHART) | | |
| A | US-A-3 840 798   (M.A. BURCHALL) | | |

RECHERCHIERTE SACHGEBIETE (Int. Cl. ³)

H 02 J    9/00
H 02 M    1/10
H 02 M    5/00
H 02 M    7/00

Der vorliegende Recherchenbericht wurde für alle Patentansprüche erstellt.

| Recherchenort | Abschlußdatum der Recherche | Prüfer |
|---|---|---|
| BERLIN | 13-08-1984 | FAORO G |